# EUROPEAN PATENT APPLICATION

(11) **EP 1 898 517 A2**
(43) Date of publication of application: **12.03.2008**
(21) Application number: 07015614.6
(22) Date of filing: 08.08.2007
(51) Int. Cl.: H02P 6/16

(54) **Control apparatus and electric brake apparatus**

(30) Priority: 05.09.2006 JP 2006239696
(71) Applicant: Hitachi, Ltd., Chiyoda-ku Tokyo 100-8280 (JP)
(72) Inventor: Sasaki, Masataki, Tokyo 100-8220 (JP); Ajima, Toshiyuki, Tokyo 100-8220 (JP); Saito, Hiroyuki, Tokyo 100-8220 (JP)
(74) Representative: Beetz & Partner

(57) **Abstract**

In an apparatus using an inverter as a motor drive apparatus (10), continuous operation can be permitted during a motor open-phase without providing any additional switching element. Especially, in an electric brake apparatus (30), higher security can be assured. When a motor winding (LU, LV, LW) of one phase occurs an open-phase, currents are conducted to the remaining normal phases while taking the position of a rotor (101) of motor (20) into account to thereby generate torque of the motor (20). Since the motor torque can be generated continuously in the event of a phase malfunction, reliability of apparatus such as the electric brake apparatus (30) can be improved.

## Description

### BACKGROUND OF THE INVENTION

The present invention relates to controlling a motor drive apparatus during its abnormal operation and more particularly to a motor drive apparatus suitable for an electric brake apparatus causing an electric motor to generate a braking force.

An electric brake apparatus has been known as disclosed in, for example, JP-A-11-257389, according to which a motor is provided for the brake apparatus and rotary output of the motor is converted into an axial thrust which in turn acts as a braking force to be applied to a rotary disk of a car, for example, through frictional pads.

In this type of electric brake apparatus, there is a possibility that motor torque will become invalid when the motor or a motor drive apparatus becomes faulty owing to an open-phase. The brake is one of the important security parts the car has and its function needs to be degraded stepwise in the event of a failure of the apparatus but in the conventional electric brake apparatus, the stepwise function degradation can hardly fulfill itself in the event that motor torque from which the braking force originates becomes invalid.

To cope with the phase malfunction in the motor and motor drive apparatus, a contrivance as disclosed in, for example, JP-A-55-111691 has been known in which a cyclo-converter is used as a three-phase motor drive apparatus and when a motor open-phase takes place in one phase, currents are passed through the two remaining phases to generate a revolving magnetic field in the motor.

Also known from, for example, JP-A-6-280587 is another contrivance in which an inverter is used for a motor drive apparatus and in order to assure independent current conduction to the two remaining phases getting free of open-phase, a separate switching element for one phase is connected to the neutral point of a three-phase motor stator, so that currents can be passed to the respective phases independently of each other.

### SUMMARY OF THE INVENTION

In contrast to the cyclo-converter capable of passing currents to the individual windings of a motor independently of one another, the inverter uses two switching elements in association with one phase and currents are conducted to the motor by means of switching elements for three phases. Accordingly, even if the technique of the cyclo-converter is applied to the inverter incapable of passing currents to the individual phases independently of one another, a revolving magnetic field cannot be generated in the event of a motor open-phase.

In the aforementioned conventional technique of connecting a separate switching element for one phase to the neutral point of a three-phase motor stator, however, the preparatory switching element is provided and therefore the number of connection lines between the motor and the inverter increases, giving rise to an increased apparatus size and increased apparatus costs.

An object of the present invention is to permit continuous operation during a motor open-phase without resort to any additional switching element in an apparatus using an inverter as a motor drive apparatus.

According to the present invention, to accomplish the above object, when one of three phases malfunctions, switching signals to the two remaining normal phases necessary for continuation of rotation are calculated on the basis of a rotational direction of a rotor and current values of the two normal phases and then are outputted.

With the present invention constructed as above, continuous operation can be assured during motor open-phase without additionally providing a switching element in an apparatus using an inverter as a motor drive apparatus and higher security can be attained in an electric brake apparatus using this type of apparatus.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram schematically illustrating a system of electric brake apparatus according to an embodiment of the present invention.
Fig. 2 is a circuit diagram showing a configuration of an example of an electric brake apparatus arrangement in Fig. 1.
Fig. 3 is a time chart useful to explain an example of current conduction state during motor open-phase malfunction according to the invention.
Fig. 4 is a time chart for explaining another example of current conduction state during motor open-phase according to the invention.
Fig. 5 is a time chart for explaining still another example of current conduction state during motor open-phase according to the invention.
Fig. 6 is a circuit diagram showing a configuration of another example of the electric brake apparatus arrangement according to the invention.
Fig. 7 is a sectional view of an embodiment of the electric brake apparatus in the present invention.
Fig. 8 is a flowchart showing operation of a PKB mechanism during motor open-phase in the Fig. 7.

### DETAILED DESCRIPTION OF THE EMBODIMENTS

The present invention will now be described by way of example of an electric brake apparatus for performing braking force control with a motor but the invention is in no way applied limitedly to the electric brake apparatus only and can be applied generally to motor drive apparatus for driving a three-phase synchronous motor.

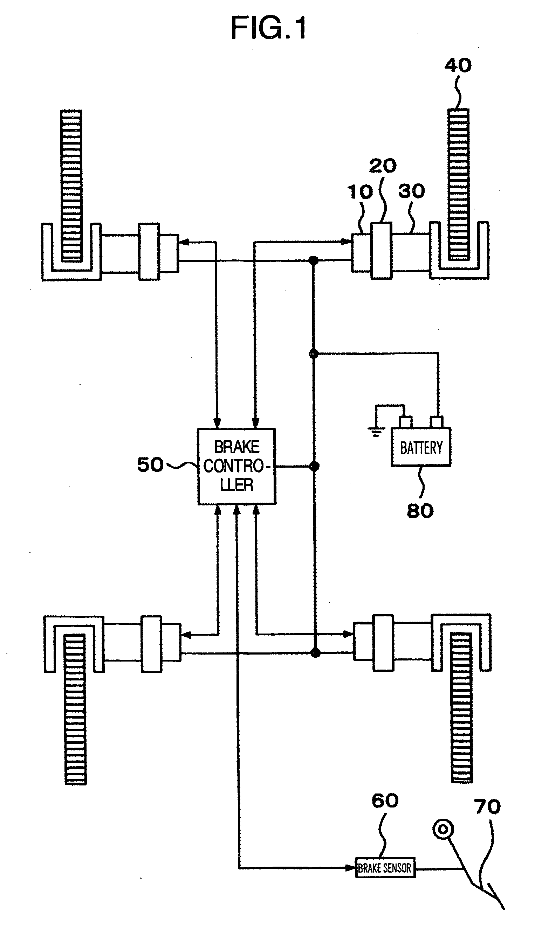

Referring first to Fig. 1, a system of electric brake apparatus according to an embodiment of the present invention is illustrated therein in schematic diagram form.

An electric brake apparatus 30 (including a pressure sensor 120) is one for converting the torque of a motor 20 in the form of, for example, a permanent magnet brushless motor into a thrust force of a piston to thrust a disk rotor 40 and the motor 20 is mounted integrally with a motor drive apparatus 10. A battery (VB) 80 supplies electric power to motor drive apparatus 10 and a brake controller 50 each.

When a driver steps on a brake pedal 70, a brake sensor 60 reads a braking force requested by the driver and transmits it to the brake controller 50. The brake controller 50 calculates from the braking force requested by the driver a braking force command value for each brake apparatus and transmits it to the motor drive apparatus 10 associated with each brake apparatus. The motor drive apparatus 10 follows the braking force command value to supply a suitable drive voltage to the motor 20. The drive voltage is a pulse-width modulated three-phase AC voltage, for instance. Being applied with the drive voltage, the motor 20 rotates and motor torque is converted into a thrust force for the piston (not shown) which in turn thrusts the disk rotor 40 through brake pads.

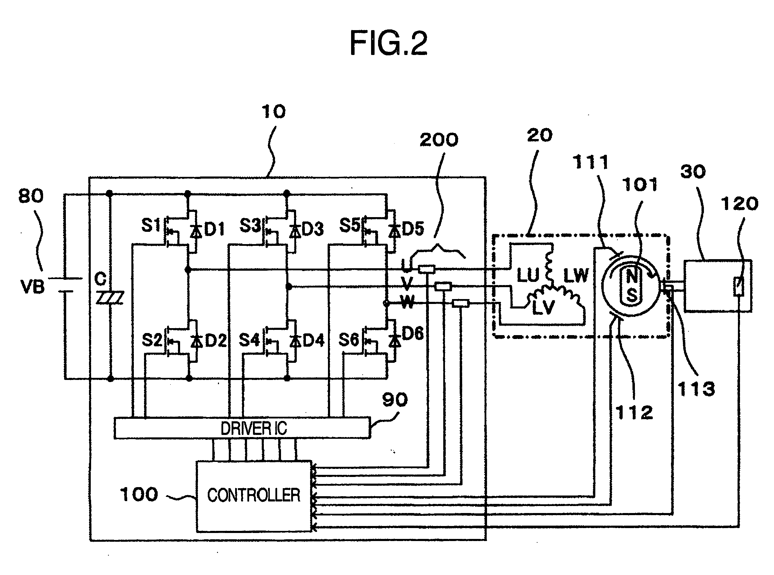

Turning to Fig. 2, a circuit configuration of an example of the electric brake apparatus arrangement in Fig. 1 is illustrated.

The motor drive apparatus 10 includes a power conversion circuit having switching elements for three phases of which one phase is comprised of two switching elements, a driver IC 90 which drives the switching elements and an operation circuit 100 which transmits to the driver IC 90 on-off commands for the switching elements. In Fig. 2, the switching element is depicted as being a MOSFET but it may employ an IGBT in combination with a diode.

The operation circuit 100 receives, in addition to the braking force command values from the brake controller 50, output currents of the power conversion circuit which can be determined from signals delivered out of a current sensor 200 inserted in connection lines (U, V, W) from the power conversion circuit to the motor 20, a thrust applied to the disk rotor 40 and information of magnetic pole positions of motor rotor 101 delivered out of position sensors 111 to 113 adapted to detect the magnetic pole positions of rotor of the motor 20 as well, thereby calculating on-off timings for the switching elements S1 to S6 (combining with diodes D1 to D6) and on-off controlling the elements S1 to S6 through the driver IC 90.

For example, from a difference between the command current value and the sensor current value, the operation circuit 100 detects an open-phase state as represented by disconnection of motor winding(s) (LU, LV, LW) and the controller switches over from three-phase drive control to two-phase current conduction control.

### (Embodiment 1)

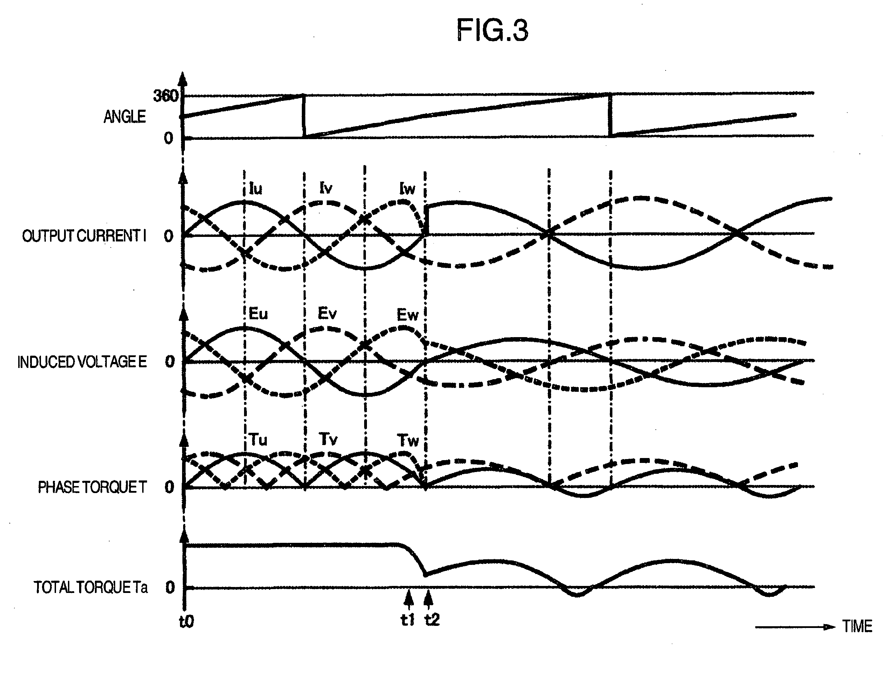

An example of a current conduction state which proceeds in accordance with teachings of the present invention in the event of a motor open-phase will be explained hereunder with reference to Fig. 3.

In the figure, abscissa represents time, showing that normal operation proceeds during a time interval of from t0 to t1. By conducting or passing three-phase sine-wave currents from the inverter to stator windings while putting these currents with 120 degrees of phase differences of sine-waves induced voltages which are generated in windings of a stator in accordance with the alternating magnetic field intensity generated by the magnet of a rotor, periodic driving torque is generated in each phase, so that total torque can be maintained to be constant and constant rotation of the motor can be maintained. The phases of the induced voltages can be calculated from signals delivered out of the magnetic pole position detection unit. The magnetic pole position detection unit can be a resolver or Hall element as desired.

In the event that an open-phase of W-phase owing to, for example, disconnection of the motor winding at time t1, a W-phase current Iw falls down to zero rapidly (thereby an induced voltage Ew and torque Tw also fall down). In the presence of the zeroed W-phase current Iw, two-phase current conduction mode is preferably activated before remaining U-phase current Iu and V-phase current Iv fall down to zero. Then, the two-phase current conduction can be started at time t2. At that time, an induced voltage Eu in the U-phase approximates zero whereas an induced voltage Ev in the V-phase is developing at a relatively large negative level. Accordingly, by starting to conduct the V-phase current at time t2 in phase with the V-phase induced voltage, V-phase torque Tv can be generated.

On the other hand, the U-phase current Iu is passed in Iu=-Iv relation, that is, in inverse phase relation to the V-phase and is not in phase with the U-phase induced voltage Eu. Accordingly, U-phase torque Tu after time t2 partly assumes minus torque. As a result, total torque Ta differs from that during three-phase current conduction to exhibit a pulsating torque waveform but if the pulsating torque is large enough to drive the motor load, the motor can continue rotating, with the result that the braking force is not zeroed even during the motor open-phase and the electric brake apparatus can continue to operate.

### (Embodiment 2)

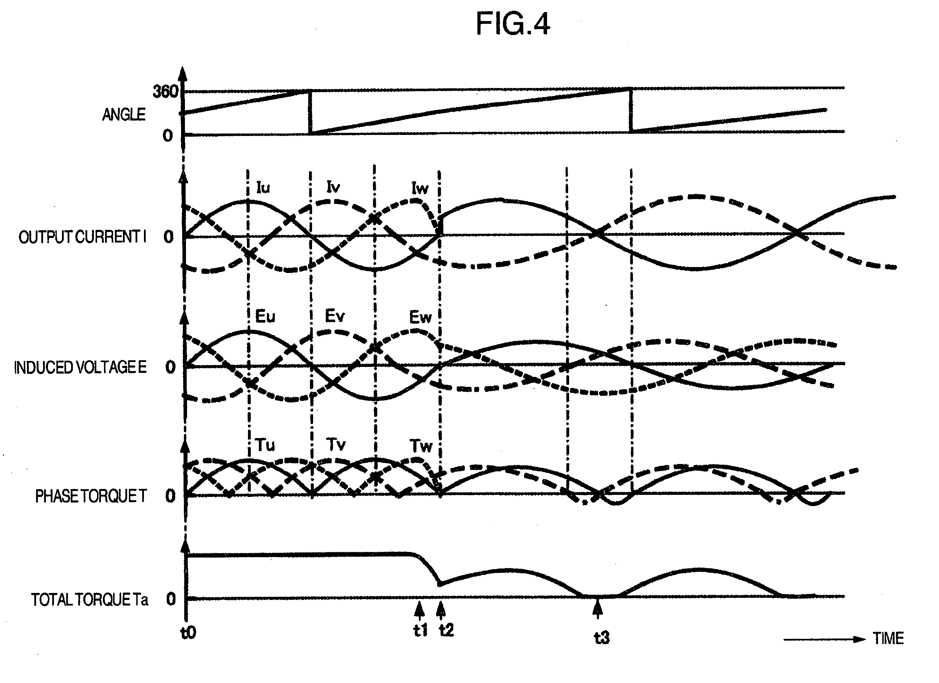

By making reference to Fig. 4, another example of current conduction state during motor open-phase according to the invention will be described.

This embodiment differs from the Fig. 3 example in that generation of minus torque in the total torque can be suppressed. Like embodiment 1, two phases start to conduct in phase with V-phase induced voltage Ev at time t2. But the current conduction does not coincide completely with the V-phase induced voltage Ev and a phase corresponding to time t3 at which values of U-phase induced voltage Eu and V-phase induced voltage Ev coincide with each other is estimated in advance from signals delivered out of the magnetic pole position sensor and the current conduction is carried out while making zero-cross points of currents coincident with each other at the phase at time t3. By making the cross-point of induced voltages coincident with that of currents, a minus component of total torque can be suppressed.

### (Embodiment 3)

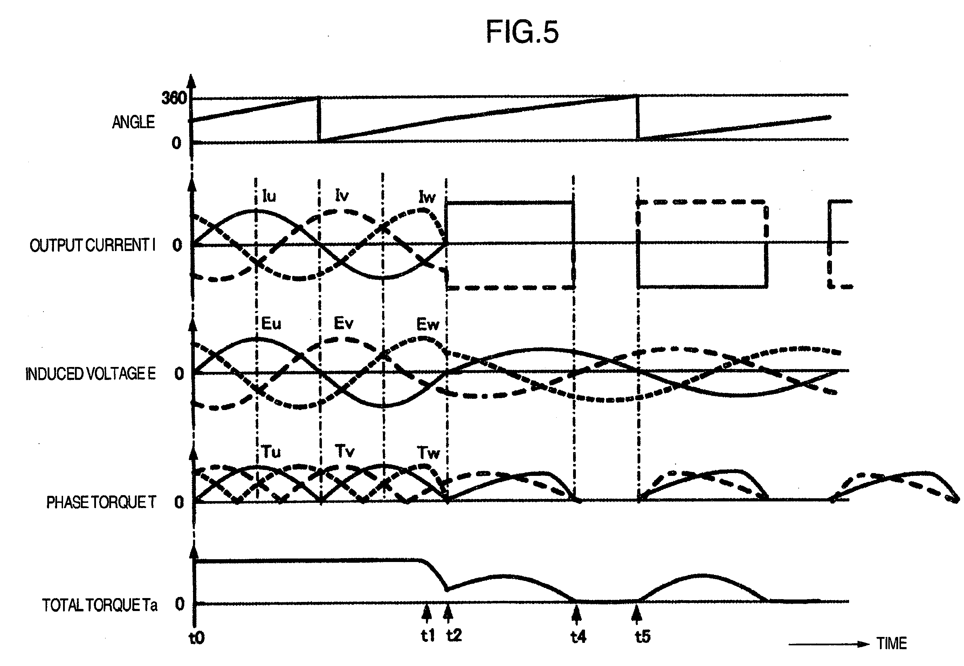

Still another example of current conduction state during motor open-phase according to the invention will be described with reference to Fig. 5.

In the present embodiment, only when a U-phase induced voltage Eu and a V-phase induced voltage Ev differ from each other in positive and negative signs or polarities, current conduction through the two phases is controlled. In addition, by making the current waveform rectangular, the battery voltage can be applied highly efficiently and the motor torque can be generated at its maximum. Since current conduction does not proceed when the U-phase induced voltage Eu and V-phase induced voltage Ev are both in the same polarity, no minus torque occurs in the motor torque (t4 to t5).

### (Embodiment 4)

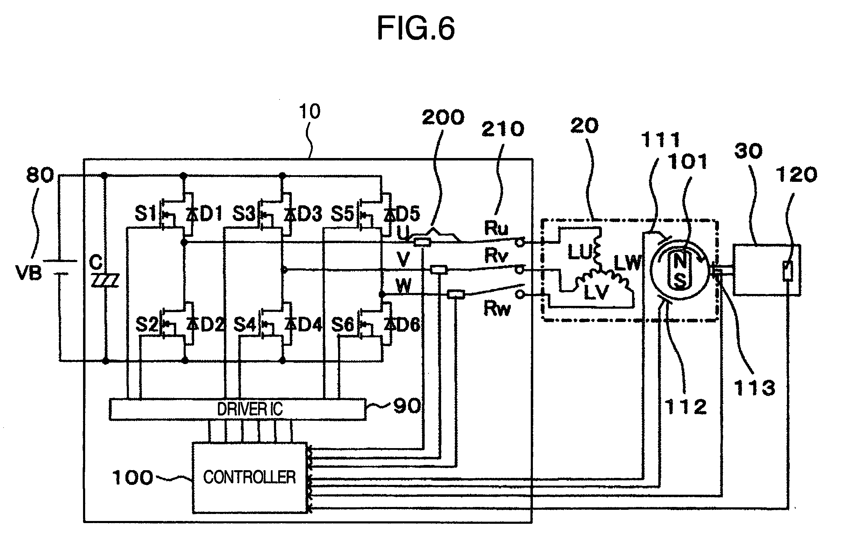

A circuit configuration of another example of the electric brake apparatus arrangement in Fig. 1 is illustrated in Fig. 6.

In this embodiment, a switch unit 210 is interposed between the motor windings and the motor drive apparatus. The motor open-phase will occur in the form of not only disconnection but also short-circuiting in some case. Then, in case the W-phase is determined to be an open-phase, the W-phase can electrically be opened without fail when one line Rw of the switch unit 210 is opened. Accordingly, current conduction through the remaining two normal phases never fails to be controlled.

Further, the switching unit is connected in series with the switching elements with a view to dealing with a defect of the switching circuit and hence, by opening a phase-line of the switching unit connected in series with a faulty switching element, the switching element of the corresponding phase can electrically be opened without fail.

Preferably, the switching unit has a resistance sufficiently smaller than that of the switching element.

The switching unit can be of a mechanical relay or of a semiconductor device having a small turned-on loss.

### (Embodiment 5)

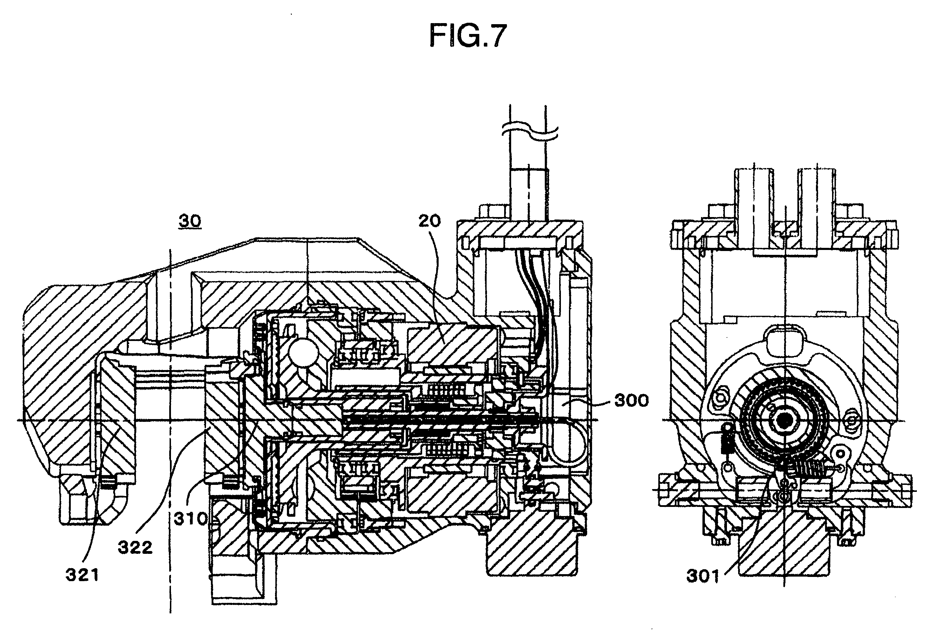

An embodiment of the electric brake apparatus according to the present invention is illustrated in sectional view form in Fig. 7.

The electric brake apparatus or caliper 30 incorporates a PKB (parking brake) mechanism 300. When the motor 20 is driven, a thrust is applied to a piston 310 which in turn causes brake pads 321 and 322 mounted to the fore end of the piston to thrust a brake rotor (not shown), thereby generating a braking force. As the brake pads 321 and 322 come in contact with the brake rotor to generate a minimum amount of thrust, the PKB mechanism 300 activates a lock mechanism 301 (for example, a contrivance adapted to fix a gear by means of a pawl as shown in the figure in order that the position of the rotor or piston or of the brake pads can be held securely even in the absence of electric energy) so as to activate the parking brake. Accordingly, there is no need of requiring a maximum output of the motor drive apparatus for the sake of operating the PKB mechanism 300. Therefore, by generating a minimal amount of motor torque even in the event of motor open-phase, the piston can be moved to the position valid for the PKB mechanism.

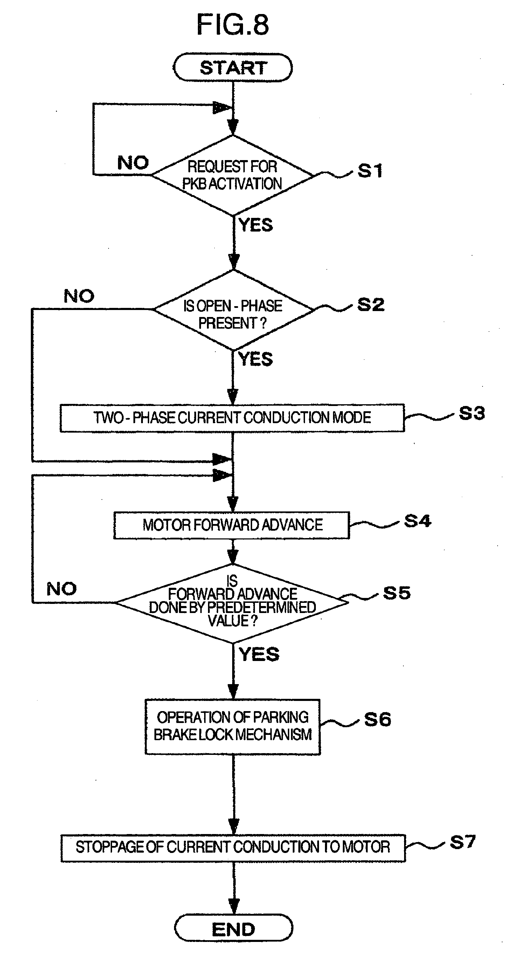

Referring now to Fig. 8, in a flowchart for the Fig. 7, PKB mechanism to operate in the event of motor open-phase will be described. With a request for PKB activation made in step S1, the presence or absence of a motor open-phase is confirmed in step S2. If the presence of motor open-phase is determined, the operation mode is switched to the two-phase current conduction mode in step S3 and the motor is driven to advance in step S4. After it is confirmed in step S5 that the motor has rotated by a predetermined amount, that is, the piston and brake pads, for example, have been moved to positions sufficient for generation of the braking force, the PKB mechanism is operated in step S6. Thereafter, in step S7, the motor current conduction is stopped and a car can be stopped perfectly.

By incorporating the motor drive apparatus into the electric brake apparatus inclusive of the PKB mechanism, the PKB mechanism can be operated through the two-phase current conduction operation even in the event that the phase of the motor of electric brake apparatus malfunctions, thus stopping the car completely.

As has been described, by controlling the current conduction in consideration of the motor rotor positions associated with the remaining normal phases during motor open-phase, motor torque can be generated without causing motor torque to fall down to zero and as a result the braking force can be generated even during the motor open-phase in the electric brake apparatus and the like, contributing to improvements in reliability of the apparatus.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on embodiments of the invention, the invention is not limited thereto and various changes and modifications may be made without departing from the scope of the appended claims.

## Claims

1. A control apparatus which controls a synchronous motor (20) comprised of a stator having three-phase windings (LU, LV, LW) and a rotor (101) having a permanent magnet, comprising:
a magnetic pole position detector (111 to 113) which detects positions of magnetic poles of the rotor (101) ;
a three-phase switching circuit which includes a plurality of switching elements (S1 to S6) adapted to perform current conduction to the three-phase windings (LU, LV, LW); and
an operation circuit (100) which, when one of the three phases malfunctions, calculates, based on a rotational direction of the rotor (101) and current values to the two remaining normal phases, switching signals which are passed to the two normal phases in order to continue rotation of the synchronous motor (20).

2. The control apparatus according to claim 1, wherein the operation circuit (100) determines the occurrence of an open-phase from a difference between a commanded current value and a sensor current value.

3. The control apparatus according to claim 1 or 2, wherein the operation circuit (100) controls current conduction in such a manner that current is passed through one of the two normal phases in in-phase relation to an induced voltage of high level developing in the one normal phase and current is passed through the other normal phase, having an induced voltage of low level, in inverse phase relation to the current in the one phase in which the high-level induced voltage develops.

4. The control apparatus according to at least one of the preceding claims, wherein the operation circuit controls current conduction through the two normal phases such that generated torque is maximized.

5. The control apparatus according to at least one of the preceding claims, wherein the operation circuit controls current conduction through the two normal phases in such a phase relation between the two normal phases that torque inverse to the rotational direction is not generated.

6. The control apparatus according to at least one of the preceding claims, wherein the operation circuit controls current conduction through the two normal phases such that generation of minus torque is suppressed.

7. The control apparatus according to at least one of the preceding claims, wherein when switching over from three-phase current conduction to two-phase current conduction, the operation circuit estimates induced voltages based on signals from the magnetic pole position detector to decide which phase is used as a criterion for control of current conduction.

8. The control apparatus according to at least one of the preceding claims, further comprising a switch unit (210) which opens, when the switching element is shortcircuited, a circuit of a corresponding faulty phase.

9. An electric brake apparatus (30) having a piston (310) movable by a synchronous motor (20) comprised of a stator having three-phase windings (LU, LV, LW) and a rotor (101) having a permanent magnet to generate a braking force based on a thrust by the piston, comprising:
a magnetic pole position detector (111 to 113) which detects positions of magnetic poles of the rotor (101);
a three-phase switching circuit which includes a plurality of switching elements (S1 to S6) adapted to perform current conduction to the three-phase windings (LU, LV, LW); and
an operation circuit (100) which calculates, when one of the three phases malfunctions, on the basis of a rotational direction of the rotor and current values to the two remaining normal phases, switching signals which are passed to the two normal phases in order to continue rotation of the synchronous motor (20).

10. The electric brake apparatus according to claim 9, further comprising a parking brake mechanism (300) having a lock mechanism (301), wherein when an open-phase is detected during operation of the parking brake mechanism (300), the operation circuit (100) outputs a signal for activating the lock mechanism (301) after the synchronous motor (20) has rotated to a predetermined value under the direction of the magnetic pole position detector (111 to 113).
